# EUROPEAN PATENT APPLICATION

(11) **EP 4 556 349 A1**
(43) Date of publication of application: **21.05.2025**
(21) Application number: 24207436.7
(22) Date of filing: 18.10.2024
(51) Int. Cl.: B62D 15/02

(54) **AUTOMATIC PARKING CONTROL SYSTEM**

(30) Priority: 16.11.2023 JP 2023195162
(71) Applicant: Suzuki Motor Corporation, Shizuoka 432-8611 (JP)
(72) Inventor: MIYABE, Shotaro, Hamamatsu-shi, 432-8611 (JP)
(74) Representative: Plasseraud IP

(57) **Abstract**

[Problem to be Solved] To provide an automatic parking control system that can perform convenient automatic parking control even in a state in which a mobile object is present around a vehicle.

[Solution] An automatic parking control system 1 includes: a path calculation unit 21 that sets, as a target parking position, a parking zone P facing a road B and calculates a parking path R for moving a vehicle 100 on the road B to the target parking position; a parking control unit 22 that is configured to perform automatic parking control for parking the vehicle 100 at the target parking position according to the parking path R; a mobile object detection unit 23 that detects a mobile object A present on the road B; a crossing determination unit 24 that determines whether the route of the mobile object A and the parking path R cross each other; and a parking control adjustment unit 27 that adjusts the automatic parking control performed by the parking control unit 22, when the crossing determination unit 24 determines that the route of the mobile object A and the parking path R cross each other.

## Description

### [Technical Field]

The present invention relates to an automatic parking control system for a vehicle.

### [Background Art]

Automatic parking control systems for automatic parking control have been widespread, enabling parking of a vehicle at a target parking position without a collision with surrounding obstacles. For example, Patent Literature 1 discloses a system that performs automatic parking process in response to a predetermined input from a user, stops automatic parking process not to be resumable when an obstacle is detected in a predetermined stop range from a vehicle, and suspends automatic parking process to be resumable when an obstacle is detected in a suspension range set outside the stop range.

### [Citation List]

### [Patent Literature]

[Patent Literature 1] JP 2021-160476 A

### [Summary of Invention]

### [Problem to be Solved by the Invention]

In the automatic parking control system described in Patent Literature 1, the stop range and the suspension range are set around a vehicle in order to detect an obstacle that may collide with the vehicle. A collision between the vehicle and the obstacle can be avoided by stopping or suspending automatic parking process when the obstacle is detected in the stop range or in the suspension range. However, if the obstacle is a mobile object, e.g., another vehicle, a movement of the mobile object may be interrupted. In the conventional automatic parking control system, the circumstances of a mobile object passing around a vehicle are not sufficiently examined. In many cases, automatic parking control is restricted to control in a parking lot. Thus, convenient automatic parking control is desirably performed also in a state in which a mobile object is present around a vehicle.

The present invention is devised in view of such circumstances. An object of the present invention is to perform convenient automatic parking control also in a state in which a mobile object is present around a vehicle.

### [Means for Solving the Problem]

According to an aspect of the present invention, an automatic parking control system includes: a path calculation unit that sets, as a target parking position, a parking zone facing a road and calculates a parking path for moving a vehicle on the road to the target parking position; a parking control unit that is configured to perform automatic parking control for parking the vehicle at the target parking position according to the parking path; a mobile object detection unit that detects a mobile object present on the road; a crossing determination unit that determines whether the route of the mobile object and the parking path cross each other; and a parking control adjustment unit that adjusts the automatic parking control performed by the parking control unit, when the crossing determination unit determines that the route of the mobile object and the parking path cross each other.

### [Advantageous Effect of Invention]

According to the present invention, convenient automatic parking control can be performed also in a state in which a mobile object is present around a vehicle.

### [Brief Description of Drawings]

[Figure 1] Figure 1 is a block diagram illustrating a schematic configuration of an automatic parking control system according to an embodiment of the present invention.
[Figure 2] Figure 2 is a schematic plan view illustrating a vehicle incorporating the automatic parking control system according to an embodiment of the present invention.
[Figure 3] Figure 3 illustrates an example of a parking path for parking the vehicle at a parking position facing a road under automatic parking control.
[Figure 4] Figure 4 is an explanatory drawing illustrating an example of a change of the parking path in automatic parking control.
[Figure 5] Figure 5 is an explanatory drawing illustrating an example of a temporary stop of the vehicle on the parking path in automatic parking control.
[Figure 6] Figure 6 is a flowchart showing a flow of automatic parking control according to an embodiment of the present invention.

### [Mode For Carrying Out the Invention]

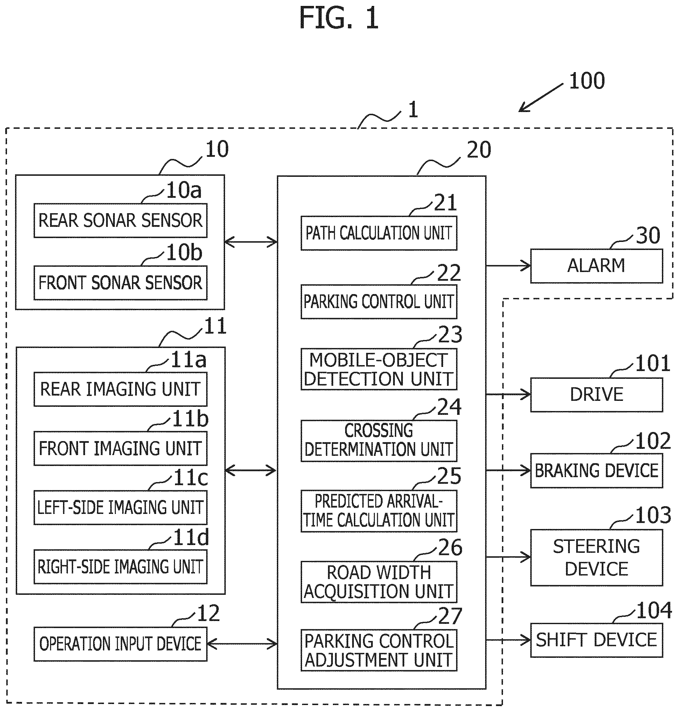

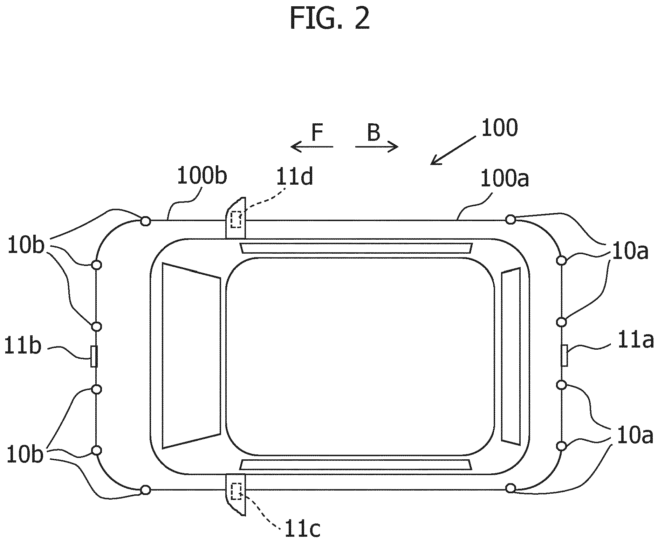

An automatic parking control system according to an embodiment of the present invention will be specifically described below with reference to the accompanying drawings. Figure 1 is a block diagram illustrating a schematic configuration of the automatic parking control system according to the present embodiment. Figure 2 is a schematic plan view illustrating a vehicle incorporating the automatic parking control system according to the present embodiment. In Figure 2, the front side of a vehicle is indicated by an arrow F while the rear side of the vehicle is indicated by an arrow B.

As illustrated in Figure 1, a vehicle 100 incorporating an automatic parking control system 1 according to the present embodiment includes a drive 101, a braking device 102, a steering device 103, and a shift device 104.

The drive (drive device) 101 is configured to generate a driving force for driving the vehicle 100, and includes an engine controller (not illustrated) that controls a driving force according to an amount of pressing an accelerator pedal (not illustrated) by a driver or in response to a control command from a controller 20, which will be described later. As the drive 101 of the vehicle 100, for example, an internal combustion engine or a motor may be used.

The braking device 102 is a brake that generates a braking force according to an amount of pressing a brake pedal (not illustrated) by a driver, and includes a brake controller and a brake actuator that are provided to generate a braking force in response to a braking command from a vehicle system or the controller 20.

The steering device 103 is configured as an electric power steering device (EPS) and is configured to provide a steered wheel with a steering angle in response to a steering operation by a driver. Moreover, the steering device 103 can also control the steering angle in response to a steering command of the controller 20 to change the traveling direction of the vehicle 100.

The shift device 104 is configured to be switchable among a D range for moving the vehicle 100 forward, an R range for moving the vehicle 100 backward, and a P range for fixing the gear of a transmission, which is not illustrated. The shift device 104 includes an actuator, which is not illustrated. In response to a control command of the controller 20, the shift device 104 is set at the D range for moving the vehicle 100 forward, the shift device 104 is set at the R range for moving the vehicle 100 backward, and the shift device 104 is set at the P range when the vehicle 100 is temporarily stopped at, for example, a turning position.

The automatic parking control system 1 incorporated in the vehicle 100 includes an obstacle detector 10, an imaging device 11, an operation input device 12, the controller 20, and an alarm (warning device) 30.

The obstacle detector 10 is configured to detect an object around the vehicle 100, that is, an obstacle of the vehicle 100, by transmitting and receiving a laser beam, an ultrasonic wave, a millimeter wave or the like and to detect a distance between the obstacle and the vehicle 100. Information about an obstacle detected by the obstacle detector 10 is input to the controller 20. In this case, the obstacle includes a mobile object, for example, another vehicle, a motorcycle, a bicycle, and a pedestrian that are located behind or ahead of the vehicle 100, in addition to a stationary object located around the vehicle 100.

In the present embodiment, the obstacle detector 10 includes, for example, a rear sonar sensor 10a that detects an obstacle in a region behind the vehicle 100, and a front sonar sensor 10b that detects an obstacle in a region ahead of the vehicle 100. The sonar sensor can accurately measure three-dimensional information about an obstacle near the vehicle 100. As illustrated in Figure 2, the rear sonar sensor 10a includes, for example, six sonar sensors separately disposed on a rear part 100a of the vehicle 100, and the front sonar sensor 10b includes, for example, six sonar sensors separately disposed on a front part 100b of the vehicle 100. The number and layout of the sonar sensors are not limited to those of Figure 2.

The imaging device 11 is configured to capture an image of a region around the vehicle 100, the region including a mobile object present around the vehicle 100. In the present embodiment, the imaging device 11 includes, for example, a rear imaging unit 11a that is disposed on the rear part 100a of the vehicle 100 so as to be able to capture an image of a rear region, a front imaging unit 11b that is disposed on the front part 100b of the vehicle 100 so as to be able to capture an image of a front region, a left-side imaging unit 11c that is disposed at the left side mirror of the vehicle 100 so as to be able to capture an image of a left-side region, and a right-side imaging unit 11d that is disposed at the right side mirror of the vehicle 100 so as to be able to capture an image of a right-side region. The imaging units 11a to 11d each include a digital camera having an imaging element, for example, a CCD or a CMOS, and is configured to output information about a region around the vehicle 100 as a still image and/or a moving image. Image data on a peripheral region captured by the imaging device 11 is input to the controller 20.

The operation input device 12 is configured to receive various operation inputs by a user, e.g., a driver to the vehicle 100. The operation input device 12 includes an automatic parking control switch to be operated by a driver to turn on or off automatic parking control. The operation input device 12 may be configured as a touch panel integrated with, for example, the display of the alarm 30, which will be described later.

The controller 20 is implemented as a computer (ECU) including a CPU (Central Processing Unit) that performs arithmetic processing, RAM (Random Access Memory) serving as a work area of the CPU and a temporary storage of operation results, ROM (Read Only Memory) that stores an operation program for performing automatic parking control, various controlled parameters, and maps or the like, an input interface, and an output interface.

The controller 20 is configured to perform the functions of, for example, a path calculation unit 21, a parking control unit 22, a mobile object detection unit 23, a crossing determination unit 24, a predicted arrival-time calculation unit 25, a road width acquisition unit 26, and a parking control adjustment unit 27 by executing the operation program stored in the ROM and to control the overall operations of the automatic parking control system 1. The detail of control by the controller 20 will be described later.

The alarm 30 is configured to provide a notification or warning to a passenger of the vehicle 100 in response to a command from the controller 20. The alarm 30 has, for example, a display, an indicator lamp, and speakers that are disposed on the instrument panel at the front of the vehicle 100 and can provide information to a passenger through a visual and/or auditory sense. The alarm 30 may also be configured to provide a notification or warning through, for example, a tactile sense.

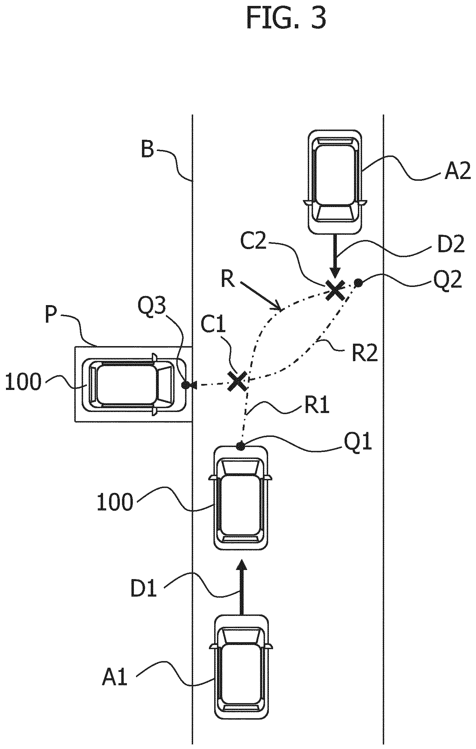

Referring to Figure 3, the basic operations of the automatic parking control system 1 will be described below. Figure 3 illustrates an example of a parking path for parking the vehicle 100 in a parking zone facing a road under automatic parking control. In Figure 3, a case in which the parking zone is located on the left side of a lane in which the vehicle 100 travels in the left-hand traffic is described as an example. In Figure 3, a dividing line between a lane in which the vehicle 100 is traveling and the opposite lane is omitted for simplicity.

The controller 20 searches for a parking zone in which the vehicle 100 can be parked, based on information about an obstacle around the vehicle 100, the obstacle being detected by the obstacle detector 10, and image data about a region around the vehicle 100, the image data being acquired by the imaging device 11. The controller 20 sets the searched parking zone as a target parking position. In this case, as illustrated in Figure 3, an example in which a parking zone P facing a road B is set as a target parking position is described. The road B is, for example, a public road on which vehicles, motorcycles, bicycles, and pedestrians can freely travel. The road B may include a private road.

The path calculation unit 21 of the controller 20 calculates a parking path for moving the vehicle 100 to the parking zone P from an initial position Q1 of the vehicle 100 before the vehicle 100 is automatically driven by automatic parking control, the parking route being calculated based on information about an obstacle around the vehicle 100 and image data about a region around the vehicle 100.

In the example of Figure 3, a parking path R is generated such that the vehicle 100 moves forward from the initial position Q1 to a turning position Q2, temporarily stops at the turning position Q2, and then moves backward to park in the parking zone P. The parking path R is indicated by a chain line. The parking path R includes a first path R1 from the initial position Q1 to the turning position Q2 and a second path R2 from the turning position Q2 to a parking position Q3 in the parking zone P. In this case, the positions Q1 to Q3 each indicate the position of the front central portion of the vehicle 100. The parking path R includes, in addition to a moving path of the vehicle 100, a temporary stop position at which the vehicle 100 is to stop on the path. The parking path R can be generated by a known algorithm, and thus a detailed description thereof is omitted.

The parking control unit 22 of the controller 20 controls the drive 101, the braking device 102, the steering device 103, and the shift device 104 and automatically drives the vehicle 100 to the parking zone P according to the generated parking path R.

When the vehicle 100 under automatic parking control is controlled to be parked in the parking zone P facing the road B, the vehicle 100 is likely to block the road B for a certain period of time. In particular, when the vehicle 100 moves along the parking path R including the turning position Q2 as illustrated in Figure 3, the vehicle 100 may cross over into the opposite lane and block the road B for a long time.

For example, it is assumed that another vehicle A1 travels behind the vehicle 100 and another vehicle A2 travels in front of the vehicle 100 on the opposite lane. If the vehicle A1 moves straight ahead on the road B, it is estimated that the route of the vehicle A1 and the parking path R of the vehicle 100 may cross each other at, for example, a crossing point C 1. If the vehicle A2 moves straight ahead on the road B, it is estimated that the route of the vehicle A2 and the parking path R of the vehicle 100 may cross each other at, for example, a crossing point C2. In this case, in order to avoid contact with the vehicle 100, the vehicles A1 and A2 are not allowed to move forward on the road B and need to be kept on standby until the vehicle 100 is parked in the parking zone P.

As described above, when the vehicle 100 under automatic parking control is moved to be parked in the parking zone P facing the road B, the vehicle 100 may block the road and interfere with the passage of the vehicles A1 and A2 traveling on the road B. In addition, when automatic parking control is started after that passage of the vehicles A1 and A2, it takes a long time to complete the automatic parking control, which may affect the convenience and comfort of the automatic parking control.

The automatic parking control system 1 according to the present embodiment is configured to adjust automatic parking control such that a time during which the vehicle 100 blocks the road B is shortened to minimize interference with the passage of a mobile object when the route of the mobile object and the parking path R of the vehicle 100 cross each other on the road B. Specifically, the automatic parking control system 1 adjusts automatic parking control by changing the parking path R or temporarily stopping the vehicle 100 on the parking path R when the route of the mobile object and the parking path R of the vehicle 100 cross each other on the road B. Referring to Figures 3 to 5, the adjustment of automatic parking control in the controller 20 will be described in detail.

The mobile object detection unit 23 of the controller 20 is configured to detect a mobile object present on the road B around the vehicle 100 based on information input from the obstacle detector 10 and/or the imaging device 11. The mobile object includes, for example, the vehicle A1 traveling behind the vehicle 100 in a lane in which the vehicle 100 is traveling, the vehicle A2 traveling in front of the vehicle 100 on the opposite lane, and a bicycle and a pedestrian that are moving around the vehicle 100.

The mobile object detection unit 23 can detect an optical flow of an obstacle present around the vehicle 100 based on image data around the vehicle acquired by the imaging device 11. The optical flow represents a movement of an object between image frames as a vector, the image frames being consecutively provided in time sequence in a moving image. Thus, by detecting the optical flow, the obstacle can be determined as a mobile object, and the moving direction and the moving speed of the obstacle can be determined. The mobile object detection unit 23 can also be configured to detect a mobile object based on information acquired from the obstacle detector 10.

The crossing determination unit 24 is configured to determine whether the route of a mobile object on the road B detected by the mobile object detection unit 23 and the parking path R of the vehicle 100 calculated by the path calculation unit 21 cross each other. For example, when the vehicle A1 is present behind the vehicle 100, the crossing determination unit 24 determines whether the route of the vehicle A1 and the parking path R cross each other on the assumption that the vehicle A1 travels along a current moving direction (route) indicated by an arrow D1. In the example of Figure 3, the parking path R of the vehicle 100 and the route of the vehicle A1 cross each other at the crossing point C1.

For example, when the vehicle A2 is present in front of the vehicle 100 on the opposite lane, the crossing determination unit 24 determines whether the route of the vehicle A2 and the parking path R of the vehicle 100 cross each other on the assumption that the vehicle A2 travels along a current moving direction (route) indicated by an arrow D2. In the example of Figure 3, the parking path R of the vehicle 100 and the route of the vehicle A2 cross each other at the crossing point C2.

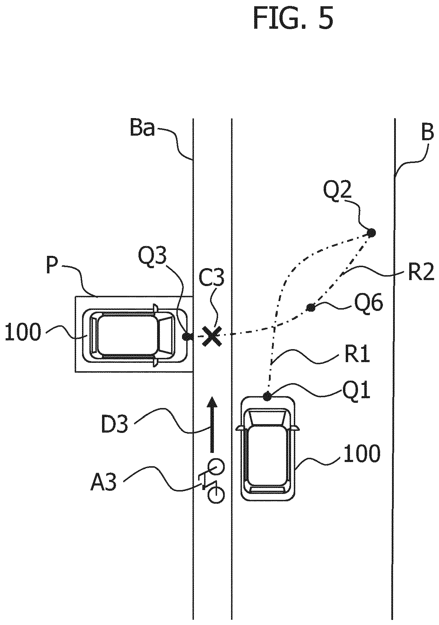

Furthermore, as illustrated in Figure 5, in the presence of a bicycle A3 traveling on the road B or a bicycle lane or a bicycle/pedestrian path Ba that is provided in the road B, the crossing determination unit 24 determines whether the route of the bicycle A3 and the parking path R of the vehicle 100 cross each other on the assumption that the bicycle A3 travels along a current moving direction (route) indicated by an arrow D3. In the example of Figure 5, the parking path R of the vehicle 100 and the route of the bicycle A3 cross each other at a crossing point C3. The crossing points C1 to C3 may be defined as the coordinates of the local coordinate system of the vehicle 100 or may be defined as the coordinates of the absolute coordinate system of the road B. In the following description, mobile objects and crossing points may be collectively denoted by character A and character C, respectively.

The predicted arrival-time calculation unit 25 is configured to calculate a predicted arrival time T that elapses before a mobile object A reaches a crossing point C with the parking path R, when the crossing determination unit 24 determines that the route of the mobile object A and the parking path R are likely to cross each other. The predicted arrival-time calculation unit 25 can calculate, as the predicted arrival time T, a time that elapses before the mobile object A reaches the crossing point C from the current position, for example, on the assumption that the mobile object A moves to the crossing point C while keeping the current moving speed.

The road width acquisition unit 26 is configured to acquire the road width of the road B in which the vehicle 100 travels, the parking zone P facing the road B. The road width acquisition unit 26 can acquire the road width of the road B based on, for example, image data input from the imaging device 11 or information about a road shape acquired from a map information database, which is not illustrated. The road width acquisition unit 26 may acquire the road width of the road B, that is, the dimension of the road B in the width direction. For example, the road width acquisition unit 26 may detect the width of another vehicle from image data and detect whether the road width of the road B allows the vehicle 100 and another vehicle to pass each other.

The parking control adjustment unit 27 is configured to adjust automatic parking control such that interference with the passage of the mobile object A is minimized when the route of the mobile object A and the parking path R of the vehicle 100 cross each other on the road B. Automatic parking control is adjusted without interfering with the passage of the mobile object A, so that the vehicle 100 and the mobile object A are prevented from crossing each other.

Specifically, when the route of the mobile object A and the parking path R of the vehicle 100 cross each other on the road B, the parking control adjustment unit 27 adjusts automatic parking control by (1) changing the parking path R or (2) temporarily stopping the vehicle 100 on the parking path R. An adjustment to automatic parking control will be described in detail according to an example of a specific scene.

### (1) Change of parking path R

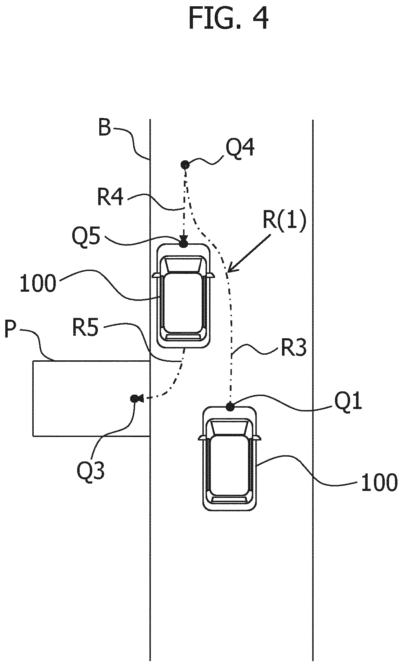

Referring to Figure 4, an example of a change of the parking path R in automatic parking control will be described below. As described above, in the case of the parking path R including the turning position Q2 placed in the opposite lane as illustrated in Figure 3, the vehicle 100 may block the road B for a long time and interfere with the passage of the mobile object A on the road B. Thus, for example, when the vehicles A1 and A2 are present behind and ahead of the vehicle 100, respectively, as illustrated in Figure 3 and the crossing determination unit 24 determines that the routes of the vehicles A1 and A2 and the parking path R are likely to cross each other, the parking control adjustment unit 27 changes the parking path R calculated by the path calculation unit 21. The parking control adjustment unit 27 changes the parking path R of automatic parking control while minimizing interference with the passage of the mobile object A.

Figure 4 illustrates an example of a change of the parking path R in Figure 3 to a parking path R(1). In the example of Figure 4, the parking path R(1) is generated as follows. The vehicle 100 moves forward from the initial position Q1 to a turning position Q4 while pulling over to one side of the road B at which the parking zone P is present, that is, the left side of the road B, temporarily stops at the turning position Q4, and then moves backward to a standby position Q5. The vehicle 100 temporarily stops at the standby position Q5 and then moves backward to park in the parking zone P. In the parking path R(1), the path and the temporary stop position are changed from the parking path R.

In order to minimize interference with the passage of the vehicles A1 and A2, the standby position Q5 is located near one side of the road B and is set at a position from which the vehicle can be parked with the minimum number of turns in the parking zone P. Depending upon the positional relationship between the standby position Q5 and the parking zone P, at least one turn may be included in the movement of the vehicle 100 from the standby position Q5 to the parking position Q3. In Figure 4, a distance from the vehicle 100 to one side of the road B is exaggerated for convenience of illustration.

In the changed parking path R(1), the crossing point C1 with the vehicle A1 behind the vehicle 100 and the crossing point C2 with the vehicle A2 ahead of the vehicle 100 shown in Figure 3 are eliminated, thereby preventing contact between the vehicle 100 and the vehicles A1 and A2. The parking control adjustment unit 27 temporarily stops the vehicle at the standby position Q5, and then restarts a backward movement of the vehicle 100 to move the vehicle 100 to the parking position Q3 after the vehicle A1 behind the vehicle 100 or the vehicle A2 ahead of the vehicle 100 passes through the crossing points C1 and C2. The restart timing of a backward movement of the vehicle 100 from the standby position Q5 may be automatically determined by the controller 20 based on image data or the like input from the imaging device 11, or may be determined in response to a confirming operation for restarting control by a driver who has viewed the passage of the vehicles A1 and A2, for example, a switching operation of the operation input device 12.

The parking path R is changed on the assumption that the vehicles A1 and A2 pass through the vehicle 100 during the standby of the vehicle 100. Thus, for example, when the vehicles A1 and A2 are present behind or ahead of the vehicle 100 and the road width of the road B is equal to or greater than the road width that allows the vehicle 100 and vehicles A1 and A2 to pass each other, the parking control adjustment unit 27 can change the parking path R to the parking path R(1). If the road B has quite a large width, for example, the road B has multiple lanes that allow the vehicle 100 to move along the parking path R without interfering with the passage of the vehicles A1 and A2, or if the vehicles A1 and A2 can easily avoid the vehicle 100 by, for example, lane changing, the parking path R may remain the same. In other words, automatic parking control can be adjusted from a viewpoint of determining whether to place the vehicle 100 or the vehicles A1 and A2 on standby according to the road width of the road B. In addition, if the road width of the road B is less than the road width that allows the vehicle 100 and the vehicles A1 and A2 to pass each other, automatic parking control is not adjusted and normal automatic parking control is performed.

### (2) Temporary stop on parking path R

Referring to Figure 5, an example of a temporary stop of the vehicle 100 on the parking path R in automatic parking control will be described below. As described above, in the case of the parking path R including the turning position Q2 as illustrated in Figure 3, the bicycle A3 and the vehicle 100 may cross each other, the bicycle A3 traveling in the road B or a bicycle lane or the bicycle/pedestrian path Ba that is provided in the road B. In this case, the passage of the bicycle A3 may be interfered. Also in the presence of a pedestrian instead of or in addition to the bicycle A3, the passage of the pedestrian may be interfered.

Thus, for example, when the bicycle A3 or a pedestrian is present around the vehicle 100 and the parking zone P as illustrated in Figure 5 and the crossing determination unit 24 determines that the route of the bicycle A3 or the pedestrian and the parking path R are likely to cross each other, the parking control adjustment unit 27 temporarily stops the vehicle 100 on the parking path R calculated by the path calculation unit 21 so as not to interfere with the passage of the bicycle A3 or the pedestrian. In other words, the temporary stop position of the vehicle 100 on the parking path R is added. The addition of the temporary stop position on the parking path R may be considered as being included in the concept of a change of the parking path R.

Figure 5 illustrates an example of a temporary stop of the vehicle 100 on the parking path R in Figure 3. In the example of Figure 5, the bicycle lane or the bicycle/pedestrian path Ba is provided on one side of the road B near the parking zone P, that is, on the left side of the road B, and the bicycle A3 travels along the moving direction indicated by the arrow D3. It is expected that the route of the bicycle A3 and the parking path R cross each other at the crossing point C3. Thus, the parking control adjustment unit 27 makes an adjustment such that the vehicle 100 is temporarily stopped on the parking path R without interfering with the passage of the bicycle A3.

The parking control adjustment unit 27 determines the standby position of the vehicle 100 on the parking path R such that the route of the bicycle A3 is secured on one side of the road B near the parking zone P on the road B. For example, as illustrated in Figure 5, a position Q6 is set as a standby position in the second path R2 along which the vehicle 100 moves backward from the turning position Q2 to the parking position Q3. The standby position Q6 is set such that the vehicle 100, in particular, the rear end of the vehicle 100, does not come into contact with the bicycle A3. The parking control adjustment unit 27 temporarily stops the vehicle at the position Q6, and then restarts a backward movement of the vehicle 100 to the parking position Q3 after the bicycle A3 passes through the crossing point C3.

The restart timing of a backward movement of the vehicle 100 from the standby position Q6 may be automatically determined by the controller 20 based on image data or the like input from the imaging device 11, or may be determined in response to a confirming operation for restarting control by a driver who has viewed the passage of the bicycle A3, for example, a switching operation of the operation input device 12. Figure 5 illustrates an example in which the bicycle A3 travels near one side of the rear of the vehicle 100. Also, in a case in which the bicycle A3 travels from one side of the front of the vehicle 100 toward the crossing point C3, the vehicle 100 can be temporarily stopped on the parking path R.

The adjustment to automatic parking control by the parking control adjustment unit 27 was described above. The parking control adjustment unit 27 may be configured to adjust automatic parking control in consideration of the predicted arrival time T of the mobile object A to the crossing point C, the predicted arrival time T being calculated by the predicted arrival-time calculation unit 25.

For example, the parking control adjustment unit 27 can adjust the automatic parking control described above if it is determined that the mobile object A and the vehicle 100 are likely to cross each other at the crossing point C based on the predicted arrival time T of the mobile object A, the predicted arrival time T being calculated by the predicted arrival-time calculation unit 25. In other words, even if the crossing determination unit 24 determines that the route of the mobile object A and the parking path R are likely to cross each other, when it is determined that the mobile object A and the vehicle 100 are unlikely to cross each other at the crossing point C, automatic parking control is not adjusted and automatic parking control can be performed according to the parking path R calculated by the path calculation unit 21.

The probability of crossing of the vehicle 100 and the mobile object A at the crossing point C can be determined by, for example, comparing a vehicle arrival time S, which elapses before the vehicle 100 reaches the crossing point C from the initial position Q1, with the predicted arrival time T of the mobile object A. The arrival time S of the vehicle 100 can be calculated as the vehicle arrival time S that elapses before the vehicle 100 reaches the crossing point C from the current position Q1 when the vehicle 100 travels along the parking path R at a set vehicle speed in automatic parking control.

When the arrival time S of the vehicle 100 and the predicted arrival time T of the mobile object A substantially agree with each other, it can be determined that the vehicle 100 and the mobile object A are likely to cross each other at the crossing point C. The arrival time S of the vehicle 100 and the predicted arrival time T of the mobile object A do not need to perfectly agree with each other to determine the probability of crossing. In consideration of the sizes or the like of the vehicle 100 and the mobile object A, a proper range including the predicted arrival time T and a proper range including the vehicle arrival time S may be compared with each other to determine whether the ranges substantially agree with each other.

In addition, if the arrival time S of the vehicle 100 and the predicted arrival time T of the mobile object A are different from each other, it can be determined that the vehicle 100 and the mobile object A are unlikely to cross each other at the crossing point C. For example, if the arrival time S of the vehicle 100 is shorter than the predicted arrival time T of the mobile object A, the vehicle 100 passes through the crossing point C before the mobile object A reaches the crossing point C. Thus, it can be determined that the vehicle 100 and the mobile object A are unlikely to cross each other. For example, if the arrival time S of the vehicle 100 is longer than the predicted arrival time T of the mobile object A, the vehicle 100 passes through the crossing point C after the mobile object A passes through the crossing point C. Thus, it can be determined that the vehicle 100 and the mobile object A are unlikely to cross each other.

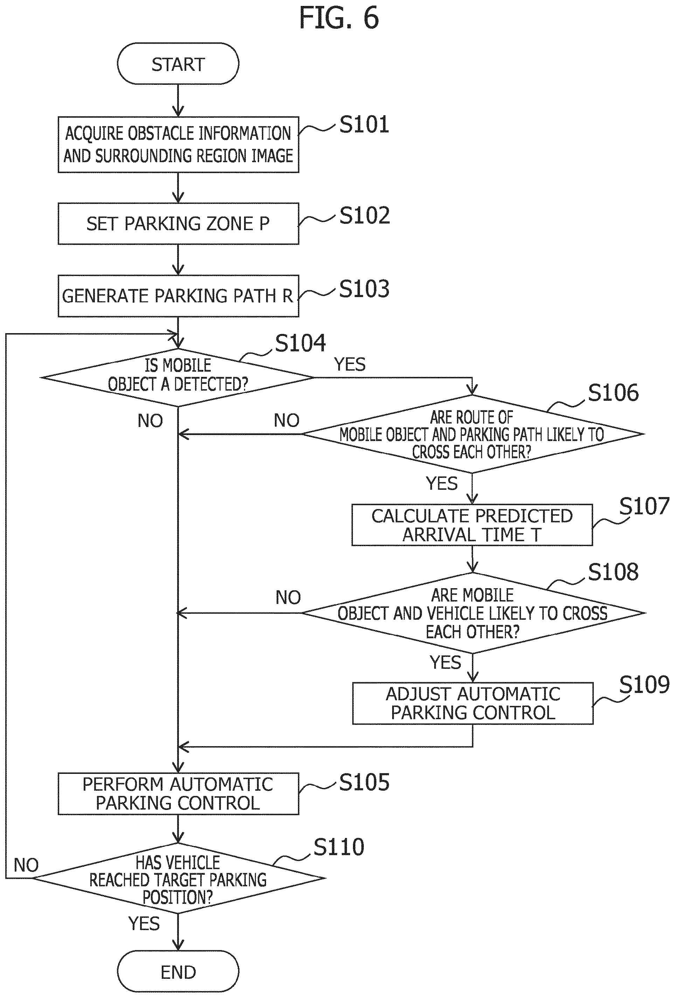

Referring to the flowchart of Figure 6, a flow of automatic parking control according to the present embodiment will be described in detail. Processing in Figure 6 is periodically performed in the controller 20. The processing in Figure 6 is started when the operation input device 12 is operated by a driver and the turn-on of automatic parking control is selected. Typically, a driver voluntarily finds the parking zone P and stops the vehicle 100 near the parking zone P, and then, the driver operates the operation input device 12 to select the turn-on of automatic parking control.

First, in step S101, the controller 20 acquires information about an obstacle around the vehicle 100, the obstacle being detected by the obstacle detector 10, and image data about a region around the vehicle 100, the image data being acquired by the imaging device 11. The acquired information about the obstacle and the image data also includes information about a mobile object present around the vehicle 100 and information about the road width of the road B in which the vehicle 100 is traveling.

In step S102, based on the information acquired in step S101, the controller 20 searches for a parking zone in which the vehicle 100 can be parked, and sets the searched parking zone P as a target parking position.

In step S103, the path calculation unit 21 generates the parking path R for moving the vehicle 100 from the position (initial position) Q1 at which the vehicle 100 is stopped to the parking position Q3 in the parking zone P set as the target parking position. Thus, the parking path R is generated, for example, as indicated by the chain line in Figure 3, with the turning position Q2.

In step S104, the presence or absence of the mobile object A around the vehicle 100 is determined. If the mobile object detection unit 23 does not detect the mobile object A, for example, the vehicle A1 behind the vehicle 100, the vehicle A2 ahead of the vehicle 100, or the bicycle A3 or a pedestrian on the road B, the process advances to step S105. If the mobile object A is detected, the process advances to step S106.

In step S106, the crossing determination unit 24 determines whether the route of the mobile object A and the parking path R of the vehicle 100 cross each other. If it is determined that the route of the mobile object A and the parking path R of the vehicle 100 are likely to cross each other, the process advances to step S107. Otherwise, the process advances to step S105.

In step S107, the predicted arrival-time calculation unit 25 calculates the predicted arrival time T that elapses before the mobile object A reaches from a current position to the crossing point C with the parking path R. At this point, the vehicle arrival time S that elapses before the vehicle 100 reaches the crossing point C from the initial position Q1 is also calculated.

In step S108, it is determined whether the mobile object A and the vehicle 100 are likely to cross each other by automatic parking control along the parking path R. Specifically, a comparison is made between the predicted arrival time T that elapses before the mobile object A reaches the crossing point C and the vehicle arrival time S that elapses before the vehicle 100 reaches the crossing point C, the predicted arrival time T being calculated in step S107. When the predicted arrival time T of the mobile object A and the arrival time S of the vehicle 100 substantially agree with each other, it is determined that the vehicle 100 and the mobile object A are likely to cross each other, and the process advances to step S109. In addition, when the predicted arrival time T of the mobile object A and the arrival time S of the vehicle 100 are different from each other, it is determined that the vehicle 100 and the mobile object A are unlikely to cross each other, and the process advances to step S105.

In step S109, as described above, the parking control adjustment unit 27 adjusts automatic parking control to minimize interference with the passage of the mobile object A. Specifically, automatic parking control is adjusted to change the parking path R and/or make a temporary stop on the parking path R based on, for example, the positional relationship between the vehicle A and the vehicle 100 and the road width of the road B. When automatic parking control is adjusted, for example, the adjustment to automatic parking control may be notified to the passenger of the vehicle 100 and/or the surroundings of the vehicle 100 by the alarm 30.

In subsequent step S105, the controller 20 performs automatic parking control. The controller 20 controls the drive 101, the braking device 102, the steering device 103, and the shift device 104 and automatically drives the vehicle 100 according to the parking path R generated in step S103 or the parking path adjusted in step S 109.

In step S 110, the controller 20 determines whether the current position of the vehicle 100 has reached the parking zone P serving as a target parking position. If it is determined that the current position of the vehicle 100 has not reached the target parking position, the process returns to step S104 to continue automatic parking control. If it is determined that the current position of the vehicle 100 has reached the target parking position, automatic parking control is terminated.

In the automatic parking control system 1 according to the present embodiment described above, the following operational effects can be obtained.
(1) The automatic parking control system 1 includes: the path calculation unit 21 that sets, as a target parking position, the parking zone P facing the road B and calculates the parking path R for moving the vehicle 100 on the road B to the target parking position; the parking control unit 22 that is configured to perform automatic parking control for parking the vehicle 100 at the target parking position according to the parking path R; the mobile object detection unit 23 that detects the mobile object A present on the road B; the crossing determination unit 24 that determines whether the route of the mobile object A and the parking path R cross each other; and the parking control adjustment unit 27 that adjusts the automatic parking control by the parking control unit 22 when the crossing determination unit 24 determines that the route of the mobile object A and the parking path R cross each other.

When automatic parking control is performed, it is determined whether the vehicle 100 and the mobile object A around the vehicle 100 are likely to cross each other. When it is determined that the vehicle 100 and the mobile object A are likely to cross each other, the automatic parking control is adjusted. With this configuration, the risk of crossing of the vehicle 100 and the mobile object A under automatic parking control can be avoided in advance. Automatic parking control can prevent the vehicle 100 and the mobile object A from coming into contact with each other. Thus, convenient automatic parking control can be performed also in a state in which the mobile object A is present around the vehicle 100. By adjusting automatic parking control while minimizing interference with the passage of the mobile object A, an enhanced effect of accident prevention can be expected when automatic parking control is performed, and greater comfort can be expected for the passenger of the vehicle 100 by minimizing interference with the passage of the mobile object A. For parking the vehicle 100 in the parking zone P facing the road B through automatic parking control, the driver of the vehicle 100 does not need to confirm the absence of the mobile object A around the vehicle 100 before operating the operation input device 12 to determine the timing for starting control, thereby improving the convenience of automatic parking control.

(2) The parking control adjustment unit 27 is configured to change the parking path R calculated by the path calculation unit 21 when the crossing determination unit 24 determines that the route of the mobile object A and the parking path R cross each other. For example, the parking path R in Figure 3 is changed to the parking path R(1) in Figure 4, and the vehicle 100 is pulled over to one side of the road B and is temporarily stopped at the standby position Q5, so that automatic parking control can be restarted after allowing the passage of the vehicles A1 and A2. Thus, the vehicle 100 and the vehicles A1 and A2 can be prevented from crossing each other, and discomfort felt by the passenger of the vehicle 100 in interference with the vehicles A1 and A2 can be reduced, so that the passenger can expect more comfort.

(3) The automatic parking control system 1 further includes the road width acquisition unit 26 that acquires the road width of the road B. If the mobile object A is the vehicle A1 or A2 and the road width of the road B is equal to or greater than the road width that allows the vehicle 100 and the vehicles A1 and A2 to pass each other, the parking control adjustment unit 27 changes the parking path R such that the vehicle 100 moves to one side of the road B near the target parking position on the road B and temporarily stops on the side. Thus, automatic parking control can be restarted after the vehicles A1 and A2 are allowed to pass while the vehicle 100 temporarily stops on one end of the road B.

(4) The parking control adjustment unit 27 is configured to temporarily stop the vehicle 100 on the parking path R when the crossing determination unit 24 determines that the route of the mobile object A and the parking path R cross each other. This can reduce interference with the passage of the mobile object A when automatic parking control is performed.

(5) If the mobile object A is a bicycle or a pedestrian moving on a side of the vehicle 100, the parking control adjustment unit 27 determines the temporary stop position of the vehicle 100 such that the route of the mobile object A is secured on one side of the road B near the target parking position on the road B. For example, as illustrated in Figure 5, if the bicycle A3 is present around the vehicle 100, to be specific, between the vehicle 100 and the parking zone P in the width direction of the road B, the vehicle 100 is temporarily stopped on the parking path R such that the route of the bicycle A3 is secured on one side of the road B near the parking zone P on the road B. This can avoid interference with the passage of the bicycle A3 in automatic parking control and prevent the bicycle A3 and the vehicle 100 from crossing each other.

(6) The automatic parking control system 1 further includes the predicted arrival-time calculation unit configured to calculate the predicted arrival time T that elapses before the mobile object A reaches the crossing point C with the parking path R, when the crossing determination unit 24 determines that the route of the mobile object A and the parking path R cross each other. The parking control adjustment unit 27 adjusts automatic parking control if it is determined that the mobile object A and the vehicle 100 are likely to cross each other at the crossing point C based on the predicted arrival time T calculated by the predicted arrival-time calculation unit 25. Thus, the risk of crossing of the mobile object A and the vehicle 100 can be prevented by adjusting automatic parking control.

(7) The parking control adjustment unit 27 is configured to temporarily stop the vehicle 100 when the crossing determination unit 24 determines that the route of the mobile object A and the parking path R cross each other. If the mobile object A has passed through the crossing point C while the vehicle 100 is temporarily stopped, or if it is determined that the vehicle 100 is allowed to pass through the crossing point C before the lapse of the predicted arrival time T calculated by the predicted arrival-time calculation unit 25, the parking control adjustment unit 27 restarts a movement of the vehicle 100 under automatic parking control. Automatic parking control is automatically restarted when the mobile object A passes through the crossing point C, eliminating the driver having to determine the restart timing of control. This improves convenience in automatic parking control. Automatic parking control is automatically restarted also when the mobile object A detected around the vehicle 100 becomes undetectable after turning to the right or left, for example. This improves convenience in automatic parking control.

(8) The parking control adjustment unit 27 is configured to temporarily stop the vehicle 100 when the crossing determination unit 24 determines that the route of the mobile object A and the parking path R cross each other. When the driver of the vehicle 100 performs a confirming operation for restarting control while the vehicle 100 is temporarily stopped, the parking control adjustment unit 27 restarts a movement of the vehicle 100 under automatic parking control. In a state in which the vehicle 100 is temporarily stopped by adjusting automatic parking control to prevent interference with the passage of the mobile object A, for example, when it is confirmed that the vehicles A1 and A2 in Figure 3 have temporarily stopped to wait for the completion of the automatic parking control of the vehicle 100, the driver of the vehicle 100 can restart automatic parking control by performing a confirming operation for restarting automatic parking control. If the mobile objects A consecutively travel around the vehicle 100, the temporarily stopped automatic parking control may fail to be quickly restarted by the controller 20. However, if the driver of the vehicle 100 can visually confirm the mobile object A on standby, automatic parking control is restarted in response to an intentional operation input by the driver, so that the temporary stop time of the vehicle 100 can be shortened to improve convenience in automatic parking control. Furthermore, the alarm 30 may be configured to notify the restart of automatic parking control to the passenger and the surroundings of the vehicle 100.

### Modification

(1) The foregoing embodiment is configured such that the parking path R is changed to the parking path R(1) and the vehicle at the standby position Q5 waits for the passage of the vehicles A1 and A2. However, the configuration is not limited thereto. The timing for starting control may be changed to start automatic parking control after the passage of the vehicles A1 and A2. In this case, for example, automatic parking control can be adjusted such that if the vehicles A1 and A2 are detected around the vehicle 100 when automatic parking control is turned on by the operation input device 12, the vehicle 100 is placed on standby at the initial position Q1 and then the vehicle 100 is moved along the parking path R including the turning position Q2 after the passage of the vehicles A1 and A2. If the initial position Q1 of the vehicle 100 interferes with the passage of the vehicles A1 and A2, the vehicle 100 may be first pulled over to one side end of the road B from the initial position Q1 and then may be placed on standby.
(2) As indicated by the crossing point C1 in Figure 3, in the case of the crossing point C1 located on the second path R2 along which the vehicle 100 moves backward to the parking position Q3, the calculated arrival time S of the vehicle 100 may be a time that elapses before the rear end of the vehicle 100 reaches the crossing point C1. In the case of a crossing point C, which is not illustrated, when the vehicle 100 moves forward to the parking position Q3, the calculated arrival time S of the vehicle 100 may be a time that elapses before the front end of the vehicle reaches the crossing point C. In this case, even if the arrival time S of the vehicle 100 is shorter than the predicted arrival time T of the mobile object A, e.g., the vehicle A1, the vehicle A1 may reach the crossing point C1 before the overall vehicle 100 passes through the crossing point C1. In this case, the vehicle A1 is placed on standby but the standby time of the vehicle A1 is short because of a short distance from the crossing point C1 to the parking position Q3. Thus, it is assumed that the passage of the vehicle A1 is not seriously interrupted. Moreover, the automatic parking control of the vehicle 100 continues without being adjusted, so that the automatic parking control can be completed without being interrupted. This can achieve convenient automatic parking control for the passenger of the vehicle 100. When the rear end of the vehicle 100 moving backward or the front end of the vehicle 100 moving forward reaches the crossing point C, for example, the vehicle A1 or the bicycle A3 behind the vehicle 100 is expected to temporarily stop and remains on standby. Thus, a collision with the vehicle 100 can be avoided, though the passage of the vehicle A1 or the bicycle A3 is interrupted.

The automatic parking control system 1 may also be configured as follows: When the vehicle 100 moves backward under automatic parking control, the crossing determination unit 24 determines whether the rear end of the vehicle 100 passes through the crossing point C before the lapse of the predicted arrival time T of the mobile object A, the predicted arrival time T being calculated by the predicted arrival-time calculation unit 25. When the vehicle 100 moves forward under automatic parking control, the crossing determination unit 24 determines whether the front end of the vehicle 100 passes through the crossing point C before the lapse of the predicted arrival time T of the mobile object A, the predicted arrival time T being calculated by the predicted arrival-time calculation unit 25. When the vehicle 100 moves backward under automatic parking control, if it is determined that the rear end of the vehicle 100 passes through the crossing point C before the lapse of the predicted arrival time T of the mobile object A, or when the vehicle 100 moves forward under automatic parking control, if it is determined that the front end of the vehicle 100 passes through the crossing point C before the lapse of the predicted arrival time T of the mobile object A, the parking control adjustment unit 27 continuously performs the automatic parking control without adjusting the automatic parking control. Furthermore, the alarm 30 may be configured to notify the continuation of automatic parking control to the passenger and the surroundings of the vehicle 100.

(3) In Figure 5 described above, the case in which the bicycle A3 or a pedestrian is present around the vehicle 100 has been described as an example. However, the mobile object A is not limited to a bicycle or a pedestrian. Automatic parking control in Figure 5 may be configured to be adjusted if the width of the mobile object A is equal to or less than a predetermined value. A mobile object having a width equal to or less than the predetermined value is a compact mobile object having a smaller width than a passenger vehicle. Such mobile objects include, for example, a motorcycle, an electric kickboard, and the like in addition to a bicycle and a pedestrian. Whether the width of the mobile object is equal to or less than the predetermined value can be determined based on, for example, image data input from the imaging device 11. In Figure 5, the case in which the mobile object A3 travels in the bicycle lane or the bicycle/pedestrian path Ba that is provided in the road B has been described as an example. However, the location of the mobile object is not limited thereto. Automatic parking control described above can also be adjusted when the mobile object A3 travels on the road B that does not include a bicycle lane or the bicycle/pedestrian path Ba.

As described above, if the width of the mobile object A is equal to or less than the predetermined value, the parking control adjustment unit 27 determines the temporary stop position of the vehicle 100 such that the route of the mobile object A is secured on one side of the road B near a target parking position on the road B. In the case of a compact mobile object having a width equal to or less than the predetermined value, the vehicle 100 is temporarily stopped on the parking path R to allow the passage of the mobile object, thereby preventing the mobile object and the vehicle 100 from crossing each other without interfering with the passage of the mobile object.

For example, the automatic parking control system 1 can also be configured as follows: If the mobile object A has a width equal to or less than the predetermined value and the parking path R calculated by the path calculation unit 21 includes a turning position after the crossing point C with the mobile object A, the parking control adjustment unit 27 is configured to change the parking path R to temporarily stop the vehicle 100 such that the route of the mobile object A is secured on one side of the road B near a target parking position on the road B. If the parking path R includes a turning position, particularly if a turning position is included after the crossing point C, the vehicle 100 is expected to block the route of the mobile object A for a long time. In the case of the compact mobile object A, for example, a bicycle having a width equal to or less than the predetermined value, the vehicle 100 is temporarily stopped after the parking path R is changed such that the route of the mobile object A is secured on one side of the road B near the parking zone P on the road B. This can avoid interference with the passage of the compact mobile object A in automatic parking control and prevent the mobile object A and the vehicle 100 from crossing each other.

(4) The alarm 30 is not an essential constituent element of the automatic parking control system 1 according to the foregoing embodiment. The alarm 30 may be omitted.

Some embodiments of the present invention were described in the foregoing description. The present invention is not limited to the embodiments and can be modified and changed in various ways within the scope of the present invention.

### [Reference Signs List]

1 Automatic parking control system
21 Path calculation unit
22 Parking control unit
23 Mobile object detection unit
24 Crossing determination unit
25 Predicted arrival-time calculation unit
26 Road width acquisition unit
27 Parking control adjustment unit
100 Vehicle
A, A1, A2, A3 Mobile object
C, C1, C2, C3 Crossing point
P Parking zone
R Parking path

## Claims

1. An automatic parking control system comprising:
a path calculation unit that sets, as a target parking position, a parking zone facing a road and calculates a parking path for moving a vehicle on the road to the target parking position;
a parking control unit that is configured to perform automatic parking control for parking the vehicle at the target parking position according to the parking path;
a mobile object detection unit that detects a mobile object present on the road;
a crossing determination unit that determines whether a route of the mobile object and the parking path cross each other; and
a parking control adjustment unit that adjusts the automatic parking control performed by the parking control unit, when the crossing determination unit determines that the route of the mobile object and the parking path cross each other.

2. The automatic parking control system according to claim 1, wherein the parking control adjustment unit is configured to change the parking path calculated by the path calculation unit when the crossing determination unit determines that the route of the mobile object and the parking path cross each other.

3. The automatic parking control system according to claim 2, further comprising a road width acquisition unit that acquires a road width of the road, wherein
if the mobile object is another vehicle and the road width of the road is equal to or greater than a road width that allows the vehicle and the other vehicle to pass each other, the parking control adjustment unit changes the parking path such that the vehicle moves to one side of the road near the target parking position on the road and temporarily stops on the side.

4. The automatic parking control system according to claim 1, wherein the parking control adjustment unit is configured to temporarily stop the vehicle on the parking path when the crossing determination unit determines that the route of the mobile object and the parking path cross each other.

5. The automatic parking control system according to claim 4, wherein if the mobile object has a width equal to or less than a predetermined value, the parking control adjustment unit determines a temporary stop position of the vehicle such that the route of the mobile object is secured on one side of the road near the target parking position on the road.

6. The automatic parking control system according to any one of claims 1 to 5, further comprising a predicted arrival-time calculation unit configured to calculate a predicted arrival time that elapses before the mobile object reaches a crossing point with the parking path, when the crossing determination unit determines that the route of the mobile object and the parking path cross each other, wherein
the parking control adjustment unit adjusts the automatic parking control if it is determined that the mobile object and the vehicle are likely to cross each other at the crossing point based on the predicted arrival time calculated by the predicted arrival-time calculation unit.

7. The automatic parking control system according to claim 6, wherein:
the parking control adjustment unit is configured to temporarily stop the vehicle when the crossing determination unit determines that the route of the mobile object and the parking path cross each other; and
if the mobile object has passed through the crossing point while the vehicle is temporarily stopped, or if it is determined that the vehicle is allowed to pass through the crossing point before a lapse of the predicted arrival time calculated by the predicted arrival-time calculation unit, the parking control adjustment unit restarts a movement of the vehicle under the automatic parking control.

8. The automatic parking control system according to claim 6, wherein:
the parking control adjustment unit is configured to temporarily stop the vehicle when the crossing determination unit determines that the route of the mobile object and the parking path cross each other; and
when a driver of the vehicle performs a confirming operation for restarting control while the vehicle is temporarily stopped, the parking control adjustment unit restarts a movement of the vehicle under the automatic parking control.

9. The automatic parking control system according to claim 6, wherein:
when the vehicle moves backward under the automatic parking control, the crossing determination unit determines whether a rear end of the vehicle passes through the crossing point before a lapse of the predicted arrival time of the mobile object, the predicted arrival time being calculated by the predicted arrival-time calculation unit, when the vehicle moves forward under the automatic parking control, the crossing determination unit determines whether a front end of the vehicle passes through the crossing point before the lapse of the predicted arrival time of the mobile object, the predicted arrival time being calculated by the predicted arrival-time calculation unit; and
when the vehicle moves backward under the automatic parking control, if it is determined that the rear end of the vehicle passes through the crossing point before the lapse of the predicted arrival time of the mobile object, or when the vehicle moves forward under the automatic parking control, if it is determined that the front end of the vehicle passes through the crossing point before the lapse of the predicted arrival time of the mobile object, the parking control adjustment unit continuously performs the automatic parking control without adjusting the automatic parking control.

10. The automatic parking control system according to claim 6, wherein if the mobile object has a width equal to or less than the predetermined value and the parking path calculated by the path calculation unit includes a turning position after the crossing point with the mobile object, the parking control adjustment unit is configured to change the parking path to temporarily stop the vehicle such that the route of the mobile object is secured on one side of the road near the target parking position on the road.
